# EUROPEAN PATENT SPECIFICATION

(11) **EP 3 698 995 B1**
(45) Date of publication and mention of the grant of the patent: **20.04.2022**
(21) Application number: 20158443.0
(22) Date of filing: 20.02.2020
(51) Int. Cl.: B60F 5/02, B64C 37/00, B64C 27/26, B64C 29/00, B64C 39/04, B64C 39/06, B64C 39/12

(54) **VTOL FIXED-WING FLYING PLATFORM SYSTEM**
VTOL STARRFLÜGEL-FLUGPLATTFORMSYSTEM
SYSTÈME DE PLATEFORME DE VOL VTOL À VOILURE FIXE

(30) Priority: 20.02.2019 US 201916281020
(43) Date of publication of application: 26.08.2020
(73) Proprietor: Shanghai Autoflight Co., Ltd., Jinshan District Shanghai 201500 (CN)
(72) Inventor: TIAN, Yu, Causeway, Hong Kong (CN)
(74) Representative: MERH-IP Matias Erny Reichl Hoffmann Patentanwälte PartG mbB

(56) References cited:
- CN-U- 207 346 074
- DE-A1- 19 745 492
- US-A1- 2006 151 666
- US-A1- 2018 305 005
- US-A1- 2018 320 402
- US-A1- 2019 009 899
- US-B2- 8 876 057
- Marco Margaritoff: "Elroy Air's 'Aluminum Falcon' VTOL Drone Can Carry Up to 150 Pounds - The Drive", , 22 December 2017 (2017-12-22), XP055624700, Retrieved from the Internet: URL:https://www.thedrive.com/aerial/17176/ elroy-airs-aluminum-falcon-vtol-drone-can- carry-up-to-150-pounds [retrieved on 2019-09-20]
- Anonymous: "Airbus' new concept is a car, a drone, and a train all in one - The Verge", , 7 March 2017 (2017-03-07), XP055625021, Retrieved from the Internet: URL:https://www.theverge.com/2017/3/7/1484 1324/airbus-concept-car-drone-train-geneva -motor-show [retrieved on 2019-09-23]

## Description

### FIELD OF THE DISCLOSURE

The present disclosure relates to a vertical takeoff and landing (VTOL) aerial drone, and more particularly, a VTOL flying platform having interchangeable and detachable cabins.

### BACKGROUND OF THE DISCLOSURE

Generally, some aerial drones are known to carry people, and some aerial drones are known to carry cargo. Each of these two types of drones has its unique challenges to perform effectively and efficiently.

There is a continuing need for new ways to carry people and/or cargo effectively and efficiently.

Marco Margaritoff, "Elroy Air's 'Aluminum Falcon' VTOL Drone Can Carry Up to 150 Pounds - The Drive", (2017-12-22), URL: https://www.thedrive.com/aerial/17176/elroyairs-aluminum-falcon-vtol-drone-can-carry-up-to-150-pounds, relates to a VTOL cargo drone. US 2018/ 320 402 A1 relates to an exchange station, which has openings for drones, a passenger check-in/check-out bay for processing passengers, a drone connect/release bay, having apparatus adapted to manage passenger pods mounted on smart chassis, and a computerized control system in wireless communication with control circuitry in the drones and smart chassis, guiding smart chassis with mounted passenger pods and drones, to make the exchange of pods from the smart chassis to drones. Anonymous, "Airbus' new concept is a car, a drone, and a train all in one - The Verge", (2017-03-07), URL: https://www. theverge.com/2017/3/7/14841324/airbus-concept-car-drone-train-geneva-motor-show, relates to a monocoque (or "passenger capsule"), that can be used in multiple modes of transportation. US 2019/009899 also discloses another example of VTOL drone.

### BRIEF SUMMARY OF THE DISCLOSURE

In particular, as a general implementation, it is provided a VTOL (vertical take-off and landing) aerial drone having the features defined in claim 1. Further, it is provided a method of managing a system of aerial drone transport and energy charging, the method has the features defined in claim 15. Further preferred embodiments are defined in the dependent claims.

In another aspect combinable with the general implementation, the flying platform can have at least two pushing propellers, each of which can be disposed at the rear end of each linear support.

In yet another aspect combinable with the general implementation, the flying platform can have at least two pushing propellers, each of which can be disposed on a vertical stabilizer, at various distance from the linear support.

In still another aspect combinable with the general implementation, the aerial drone can interchangeably couple to a cargo cabin and a passenger cabin.

In still yet another aspect combinable with the general implementation, the flying platform can have an energy storage unit disposed within its main body. Alternatively and optionally, there can be an energy storage unit disposed within the passenger cabin and/or the cargo cabin to supply energy to the flying platform. In this way, whenever the flying platform picks up a new cabin, its energy source/storage is also replenished.

In another aspect combinable with the general implementation, the flying platform can have a hybrid engine to produce electricity.

In yet another aspect combinable with the general implementation, each of the two linear supports can have a total of four lifting propellers attached, wherein at least two lifting propellers are disposed at the same lengthwise location on the same linear support, but on opposite sides (i.e., top side and bottom side) of the linear support.

In another aspect combinable with the general implementation, the flying platform can have a left wing-tip propeller disposed on the distal end of the left main wing, and a right wing-tip propeller disposed on the distal end of the right main wing.

In still another aspect combinable with the general implementation, the pushing propeller can be coupled to a rear end of the main body and is extended downward via a connector so that the pushing propeller is physically away from the main body and vertically offset from the main body.

In a further aspect combinable with the general implementation, there can be a left pushing propellers disposed in a mid-section of the left vertical stabilizer, and a right pushing propeller disposed in a mid-section of the right vertical stabilizer.

In another aspect combinable with the general implementation, the flying platform can have autonomous flight functions to transport passengers and/or cargo.

In another aspect combinable with the general implementation, the passenger cabin can include user control interface allowing the passenger to control flight path, regardless of whether or not the aerial drone has autonomous flight capabilities.

In still another aspect combinable with the general implementation, the passenger cabin and/or cargo cabin can be attached to either on the top side of the flying platform, the bottom side of the flying platform, or both.

In another aspect combinable with the general implementation, the flying platform can have at least one single-blade leaf spring as a landing gear.

In a further aspect combinable with the general implementation, the flying platform can use at least one vertical stabilizer as a landing gear.

In yet another aspect combinable with the general implementation, at least one vertical stabilizer can have a landing gear attached to its distal end.

In other aspects of the disclosure, the flying platform is equipped with motorized wheels such that the flying platform can move about freely on the ground or on the landing pad.

In still other aspects of the disclosure, the passenger cabin and/or the cargo cabin is equipped with motorized wheels such that the cabins can move about freely on the ground or on the landing pad.

Another aspect of the disclosure provides water landing gear to the passenger cabin, cargo cabin, and the flying platform. The landing gear can be an inflatable floatation device.

Accordingly, the present disclosure is directed to an aerial drone that transports goods and people using detachable cabins.

Among the many possible implementations of an aerial drone, one embodiment of the aerial drone is one that has an overall flat configuration being attachable to separable passenger and/or cargo cabins. This overall flat configuration can be defined as a flying platform, a flying trellis, a flying framework, a flying scaffold, and a flying lattice work.

Further, it is contemplated that this flying platform has a canard design having two main wings and two canard wings.

Contemplated main wings can each have a wing-tip lifting propellers disposed on the distal tip of each main wing. Optionally, the wing-tip lifting propellers can be located on a vertical stabilizer or a vertical lifter which is located at the distal end of each main wing. In this way, the wing-tip lifting propeller could be somewhat position vertically away from the top surface of the main wing.

In one embodiment, within each linear support there can be a foldable leg. During flight, the foldable leg is retracted into the linear support. During vertical takeoff and landing, the foldable leg is extended to act as a landing gear, or to support a landing gear.

While this specification contains many specific implementation details, these should not be construed as limitations on the scope of any inventions or of what may be claimed, but rather as descriptions of features specific to particular implementations of particular embodiments.

A number of implementations have been described. Nevertheless, it will be understood that various modifications may be made without departing from the scope of the claims.

The details of one or more implementations of the subject matter described in this disclosure are set forth in the accompanying drawings and the description below. Other features, aspects, and advantages of the subject matter will become apparent from the description, the drawings, and the claims.

### BRIEF DESCRIPTION OF THE DRAWINGS

It should be noted that the drawing figures may be in simplified form and might not be to precise scale. In reference to the disclosure herein, for purposes of convenience and clarity only, directional terms such as top, bottom, left, right, up, down, over, above, below, beneath, rear, front, distal, and proximal are used with respect to the accompanying drawings. Such directional terms should not be construed to limit the scope of the embodiment in any manner.
Fig. 1 is a top perspective view of an example of a VTOL drone system having a flying platform and a cargo cabin detachably attached, not falling within the scope of the present invention.
Fig. 2 is a top rear perspective view of the drone system of Fig. 1.
Fig. 3 is a side view of the drone system of Fig. 1.

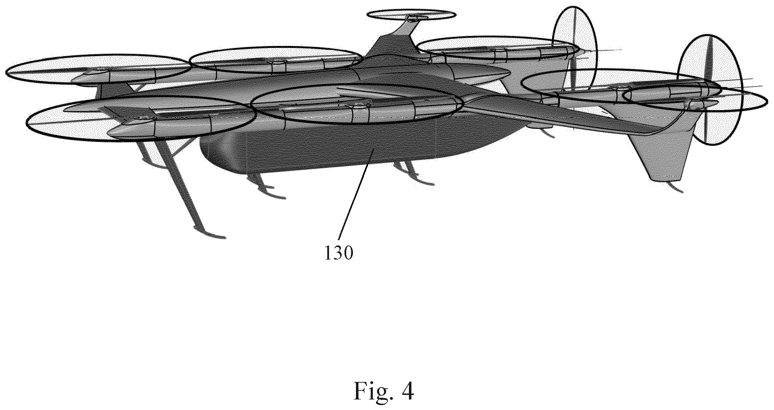

Fig. 4 is a top perspective view of another example of a VTOL drone system having a flying platform and a cabin detachably attached, not falling within the scope of the present invention.
Fig. 5 is a top view of the drone system of Fig. 4.
Fig. 6 is a front view of the drone system of Fig. 4.
Fig. 7 is a top perspective view of an example of a VTOL drone system having a flying platform and a passenger cabin detachably attached, not falling within the scope of the present invention.

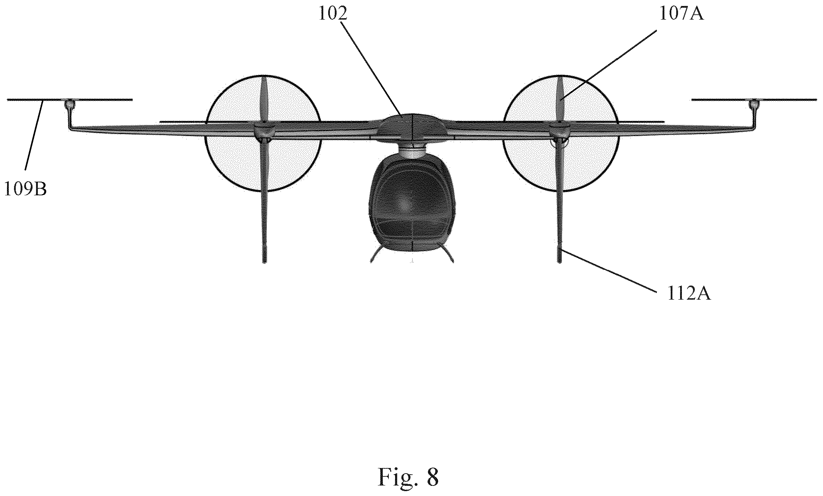

Fig. 8 is a front view of the drone system of Fig. 7.

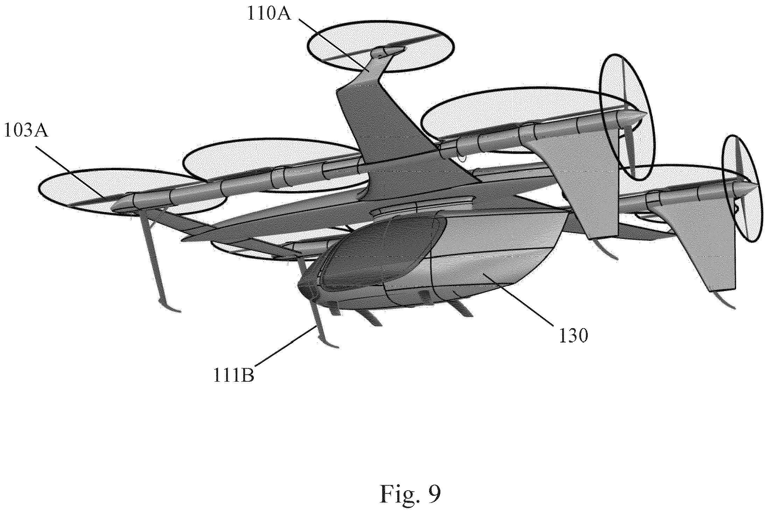

Fig. 9 is a rear perspective view of the drone system of Fig. 7.
Fig. 10 is a side perspective view of the drone system of Fig. 7 with the passenger cabin detached from the flying platform and resting on the ground.
Fig. 11 is a rear perspective view of the embodiment of Fig. 7.
Fig. 12 is a rear perspective view of an embodiment, according to an aspect of the invention.
Fig. 13 is a side bottom perspective view of still yet another example of the drone system, not falling within the scope of the present invention.
Fig. 14 is a perspective view of one example of the drone system, not falling within the scope of the present invention.
Fig. 15 is a close-up view of the encircled area in Fig. 14.
Fig. 16 is a side view of one example the drone system, not falling within the scope of the present invention.
Fig. 17 is a front view of one example of the drone system, not falling within the scope of the present invention.
Fig. 18 is a rear view of one example of the drone system, not falling within the scope of the present invention.
Fig. 19 is a bottom view of one example of the drone system, not falling within the scope of the present invention.
Fig. 20 is a perspective view of another example of the flying platform, not falling within the scope of the present invention.
Fig. 21 is a side view of another embodiment of the flying platform, according to another aspect of the invention.
Fig. 22 is a front view of another embodiment of the flying platform, according to another aspect of the embodiment.
Fig. 23 is a rear view of another embodiment of the flying platform, according to another aspect of the embodiment.
Fig. 24 is a bottom view of another embodiment of the flying platform, according to another aspect of the embodiment.
Fig. 25 is a side view of another embodiment of the passenger cabin, according to another aspect of the embodiment.
Fig. 26 is a bottom perspective view of another embodiment of the passenger cabin, according to another aspect of the embodiment.
Fig. 27 is a front view of another embodiment of the passenger cabin, according to another aspect of the embodiment.
Fig. 28 is a rear view of another embodiment of the passenger cabin, according to another aspect of the embodiment.
Fig. 29 is a bottom view of another embodiment of the passenger cabin, according to another aspect of the embodiment.
Fig. 30 is a side view of another embodiment of the flying platform attached to a cargo cabin, according to another aspect of the embodiment.
Fig. 31 is a perspective view of another embodiment of the flying platform having no pushing propellers, according to another aspect of the embodiment.
Fig. 32 is a side view of another embodiment of the passenger cabin having a pushing propeller, according to another aspect of the embodiment.
Fig. 33 is a perspective view of yet another embodiment of the flying drone system where six floatation devices are inflated.
Fig. 34 is a side view of the flying drone of fig. 33.
Fig. 35 is a flow diagram showing one embodiment of disclosed methods.

The following call out list of elements in the drawing can be a useful guide when referencing the elements of the drawing figures:
- 100: Drone
- 101: Flying platform
- 102: Main body
- 103A: Left linear support
- 103B: Right linear support
- 104A: Left main wing
- 104B: Right main wing
- 105A: Left canard wing
- 105B: Right canard wing
- 106A: Left vertical stabilizer
- 106B: Right vertical stabilizer
- 107: Pushing propeller
- 107A: Left pushing propeller
- 107B: Right pushing propeller
- 108A: First lifting propeller
- 108B: Second lifting propeller
- 108C: Third lifting propeller
- 108D: Fourth lifting propeller
- 108E: Fifth lifting propeller
- 108F: Sixth lifting propeller
- 109A: Left wing-tip propeller
- 109B: Right wing-tip propeller
- 110A: Left wing-tip vertical stabilizer
- 110B: Right wing-tip vertical stabilizer
- 111A: Left folding leg
- 111B: Right folding leg
- 112A: First leaf spring blade
- 112B: Second leaf spring blade
- 112C: Third leaf spring blade
- 112D: Fourth leaf spring blade
- 116: Vertical extender
- 117: Center pushing propeller
- 130: Cargo cabin
- 135A: First cabin leaf spring blade
- 135B: Second cabin leaf spring blade
- 135C: Third cabin leaf spring blade
- 135D: Fourth cabin leaf spring blade
- 140: Passenger cabin
- 145A: Cabin leg
- 145B: Cabin leg
- 145C: Cabin leg
- 145D: Cabin leg
- 147: Cabin attachment catch
- 148: Motorized wheel
- 149: Housing
- 150: Energy storage unit in the flying platform
- 155: Energy storage unit in the cabin
- 160: Floatation device

### DETAILED DESCRIPTION OF THE EMBODIMENTS

The different aspects of the various embodiments can now be better understood by turning to the following detailed description of the embodiments, which are presented as illustrated examples of the embodiments defined in the claims. It is expressly understood that the embodiments as defined by the claims may be broader than the illustrated embodiments described below.

The words used in this specification to describe the various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The term "drone" is defined as a flying transportation system having at least one propeller as one source of propulsion. The term "drone" can include "manned" and "unmanned" flying transportation system. A manned drone can mean a flying transportation system that carries human passengers all of who has no control over the drone. A manned drone can also mean a flying transportation system that carries human passengers some or one of who has some control over the drone.

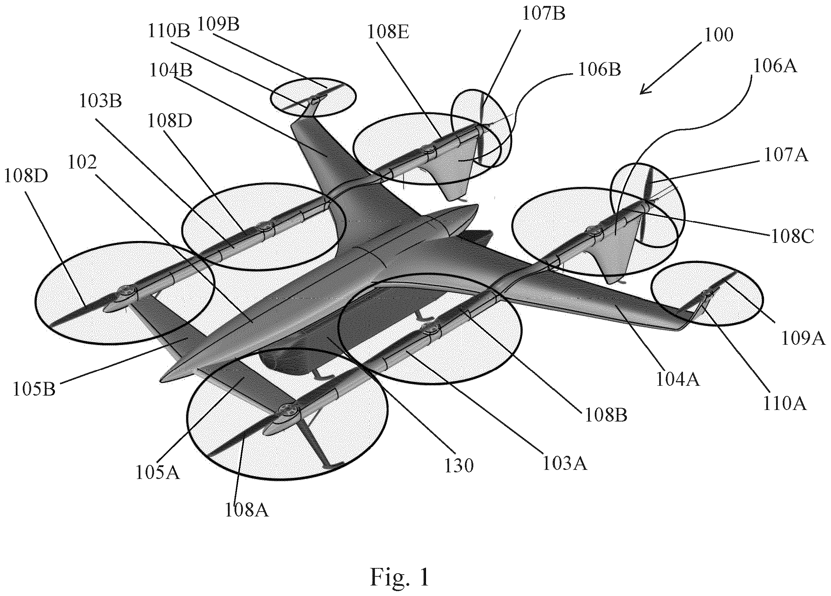

Fig. 1 generally depicts an example of VTOL aerial drone 100 having a canard configuration. The drone 100 can have two main wings 104A, 104B, and two canard wings 105A, 105B. The two main wings 104A, 104B and the two canard wings 105A, 105B can be attached to a main body 102, wherein the main body can be located alone a center longitudinal line of the drone 100. There can also be a left linear support 103A disposed parallel to the main body 102, and can connect the left main wing 104A to the left canard wing 105A. Similarly, there can also be a right linear support 103B disposed parallel to the main body 102, and can connect the right main wing 104B to the right canard wing 105B.

In yet another example, the drone 100 does not have a canard configuration. Instead, the drone 100 can have two main wings and two secondary wings, all of which are coupled together forming a flying platform.

The left and right linear supports 103A, 103B are contemplated to improve the structural integrity of the drone 100. In other examples, the left and right linear supports 103A and 103B can house driving motors (not shown) that drives each of the lifting propellers 108A, 108B, 108C, 108D, 108E, 108F. As will be disclosed later, the left and right linear supports 103A and 103B can also house folding legs 111 each of which is retrievable within the left and right linear supports 103A and 103B.

In one example, the left and right linear supports 103A, 103B are attached to the distal ends of left and right canard wings 105A, 105B, respectively. In yet another example, the left and right linear supports 103A, 103B extend beyond the canard wings 105A, 105B.

In one example, the left and right linear supports 103A, 103B are attached to near the mid-section of left and right main wings 104A, 104B, respectively. In yet another example, the left and right linear supports 103A, 103B extend in a rearward direction beyond the main wings 104A, 104B.

The left linear support 103A is contemplated to be relatively narrow in diameter and may have a plurality of lifting propellers 108A, 108B, 108C disposed on either the top side, bottom side, or both, of the left linear support 103A. These lifting propellers 108A, 108B, 108C can be driven by low profile motors disposed within the hollow interior of the left linear support 103A. In the example shown in Fig. 1, lifting propellers 108A, 108B, 108C are disposed only on the top side of the left linear support 103A.

Likewise, the right linear support 103B is contemplated to be relatively narrow in diameter and may have a plurality of lifting propellers 108D, 108E, 108F disposed on either the top side, bottom side, or both, of the right linear support 103B. These lifting propellers 108D, 108E, 108F can be driven by low profile motors disposed within the hollow interior of the right linear support. In the example shown in Fig. 1, lifting propellers 108D, 108E, 108F are disposed only the top side of the right linear support 103B.

The drone 100 may have at least one pushing propeller to pushing the drone 100 in a forward direction. In one example as shown in Fig. 1, there can be two pushing propellers 107A, 107B. The two pushing propellers 107A, 107B can be disposed, respectively, on the rear distal ends of linear supports 103A, 103B.

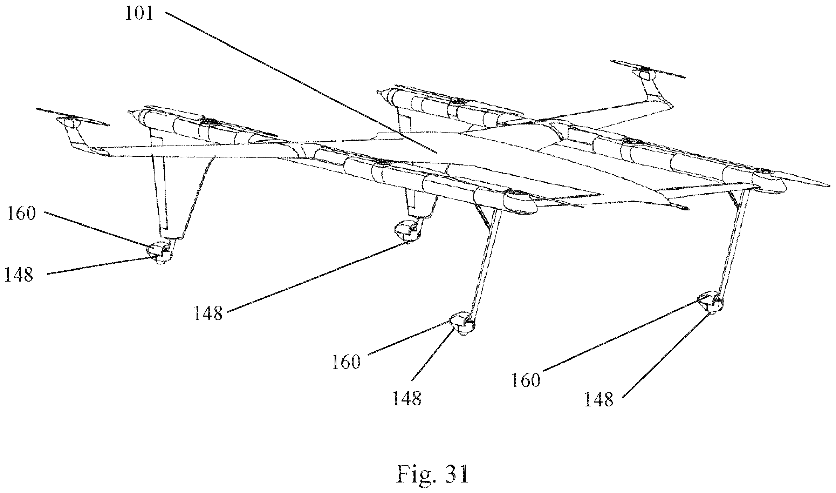

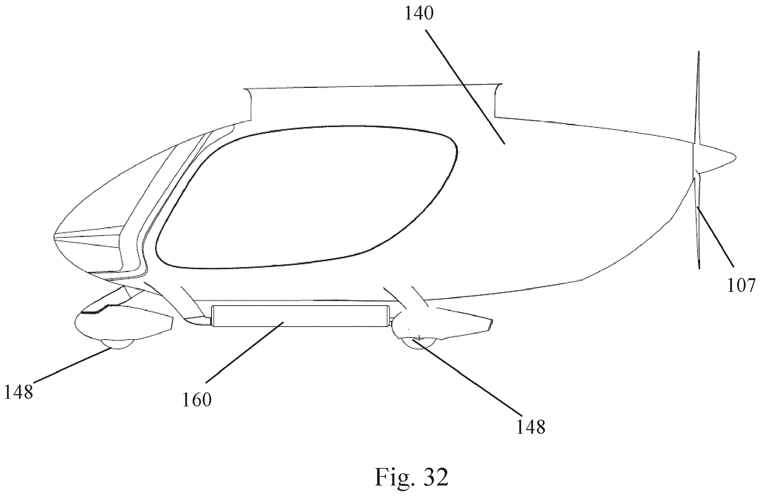

In an embodiment such as one illustrated in Fig. 31, the flying platform 101 can have no pushing propeller. In such embodiment, the flying platform 101 can attach to a passenger cabin or a cargo cabin that has a pushing propeller disposed thereon. Fig. 32 illustrates an embodiment of a passenger cabin having a pushing propeller disposed on its rear end. When this passenger cabin is attached to the flying platform 101 of Fig. 31, the pushing propeller pushes the flying platform 101 forward.

Near the rear ends of each linear support 103A, 103B can be provided two vertical stabilizers 106A, 106B, respectively. While they are shown pointing downwards, there can also be an embodiment where they point upwards.

In another embodiment, each of the main wings 104A, 104B can have an additional lifting propeller 109A, 109B, respectively, disposed at its distal end. This can be achieved by providing wing-tip vertical stabilizers 110A, 110B at the distal ends of the main wings 104A, 104B, respectively, and have the lifting propellers 109A, 109B disposed at the upper tip of each wing-tip vertical stabilizers 110A, 110B. These wing-tip lifting propellers 109A, 109B can be relatively smaller than the lifting propellers disposed on the linear supports 103A, 103B.

These wing-tip lifting propellers 109A, 109B can be used to effectively and efficiently control the roll of the drone 100. Being located at a most distal position away from the center axis of the drone 100, these wing-tip lifting propellers 109A, 109B are effective in adjusting the roll of drone 100, and can do so with a diameter smaller than that of other lifting propellers.

As shown further in Fig. 1, there is a cabin 130 generally attached under the main body 102 of the drone 100.

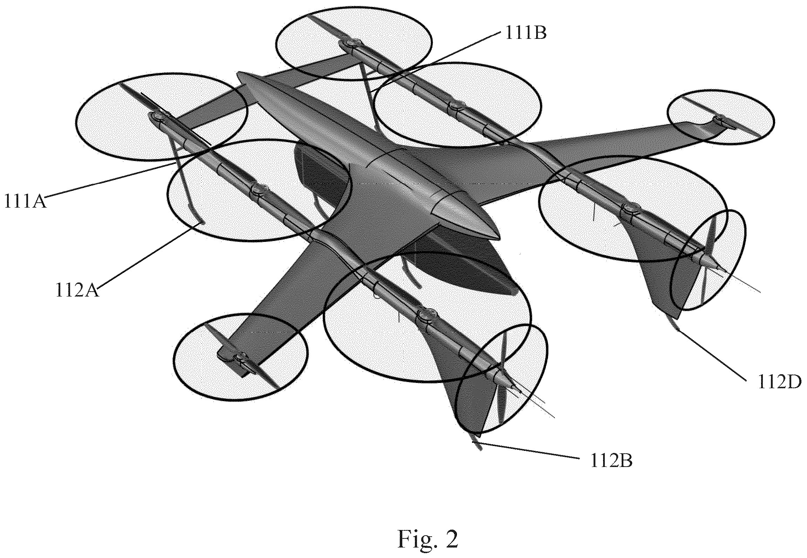

Referring now to the details of FIG. 2, the drone 100 is contemplated to use any type of landing gear. In one example, the drone 100 can have four single-blade leaf springs 112A, 112B, 112C, 112D as its landing gear. The front two single-blade leaf springs 112A, 112C are respectively disposed on the distal ends of folding legs 111A, 111B. Folding legs 111A, 111B can be respectively retracted into the interior space of the left and right linear supports 103A, 103B during flight.

The rear two single-blade left springs 112B, 112D are contemplated to be disposed at the bottom distal ends of vertical stabilizers 106A, 106B, respectively.

The contemplated single-blade leaf springs 112A, 112B, 112C, 112D can be made of suitable materials to provide sufficient resiliency and integrity, such materials include natural and synthetic polymers, various metals and metal alloys, naturally occurring materials, textile fibers, and all reasonable combinations thereof. In one embodiment, carbon fiber is used.

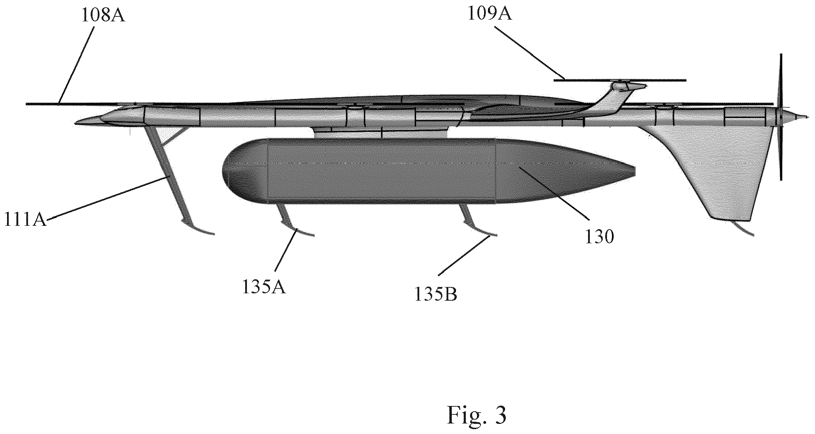

Turning now to Fig. 3, which shows the cabin as a cargo cabin 130. The cargo cabin 130 can have single-blade leaf springs 135A, 135B, 135C, 135D as its landing gear. Alternatively it can have other types of landing gear such as skids, leg stands, and wheels.

In the contemplated embodiments, the cargo cabin 130 is detachable from the rest of the drone 100. The remaining portion of the drone can be called a flying platform 101. The flying platform 101 can fly without carrying a cabin, and it can interchangeably carry different cabins. As will be described later, the flying platform 101 can also carry passenger cabins.

In the examples shown, all of the cabins 130, 140 are carried underneath the flying platform 101. Cabins 130, 140 are contemplated to be loaded on the ground, and the loading process can be done prior to or after the flying platform 101 is attached to the cabin 130, 140.

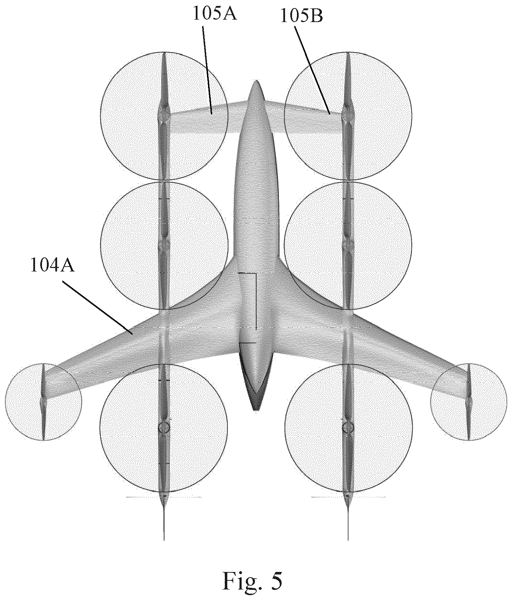

Fig. 5 shows a top view of the flying platform 101. It can have a generally flat configuration, capable of carrying a load underneath it, or above it. During high speed flying, all six lifting propellers 108A, 108B, 108C, 108D, 108E, 108F can be locked into position so each blade is parallel to the main body 102.

Fig. 5 shows one example of the flying platform 101 where the canard wings 105A, 105B each has a length no longer than half the length of each of the main wings 104A, 104B.

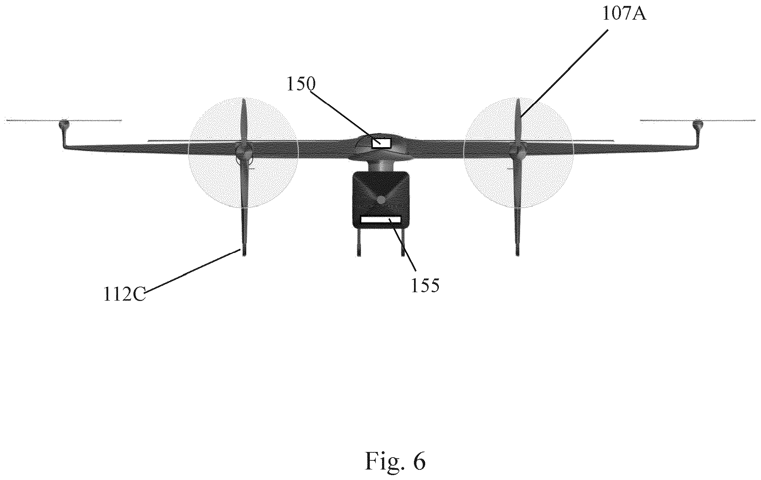

Fig. 6 generally depicts the frontal view of the flying platform 101 with a detachably attached cargo cabin 130. Whether it is a cargo cabin 130, passenger cabin 140, or any other types of load, it is especially contemplated that there can be an energy storage unit 150 disposed within the main body 102 of the flying platform. The energy stored can be used to power other components of the flying platform, such as the lifting propellers 108A, 108B, 108C, 108D and pushing propellers 107A, 107B. The energy stored can be electricity, and the storage unit is a battery. In another embodiment, this energy storage 150 can be used to power accessories within the cabin 130, 140.

These batteries 150 can also be disposed in other parts of the flying platform 101, such as within the linear supports 103A, 103B.

Alternatively or optionally, there can be an energy storage unit 155 disposed within the cabin 130, 140. The energy stored in storage unit 155 can be used to power the lifting propellers 108A, 108B, 108C, 108D and pushing propellers 107A, 107B. The energy stored can be electricity, and the storage unit is a battery. By having an energy storage unit 155 in the cabin 130, 140, the flying platform 101 would have replenished energy sources every time the flying platform 101 picks up a new cabin 130, 140. The flying platform 101 itself may be emergency energy storage, or a smaller capacity battery 150 necessary to power the flying platform 101 for shorter amount of time while it flies without a cabin 130, 140. In one embodiment, the main source of electricity for the flying platform 101 comes from battery 150 located in the cabin 130, 140. In this way, when the flying platform 101 swaps an old cabin 130, 140 out for a new cabin 130, 140, the flying platform 101 or the entire VTOL drone system 100 would have a fully charged energy source. This is a beneficial method that eliminates the need for a VTOL drone to charge itself. In a preferred embodiment, the flying platform 101 can work/fly continuously, picking up cargo cabin/passengers cabin, drop off cargo cabin/passengers cabin, for many hours, even days, without the need to stop for charging its battery.

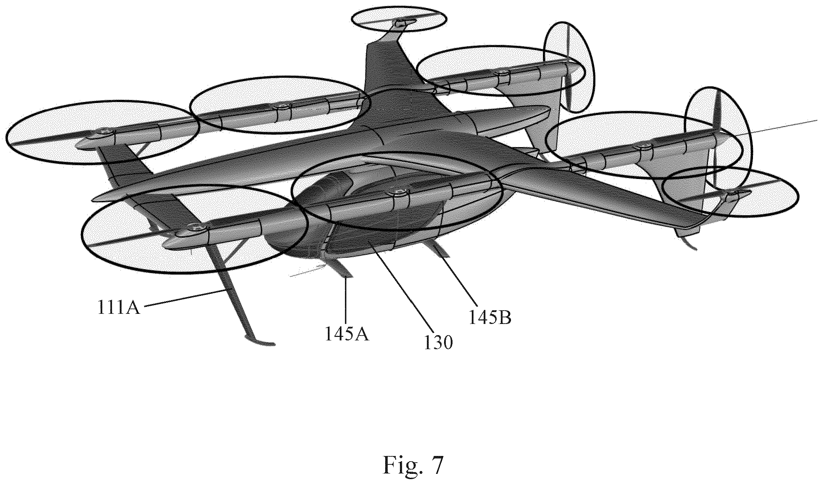

Referring now to the details of Fig. 7, a passenger cabin 150 is provided. This passenger cabin 150 can use any type of landing gear, such as stiff legs 145A, 145B, 145C, 145D as shown.

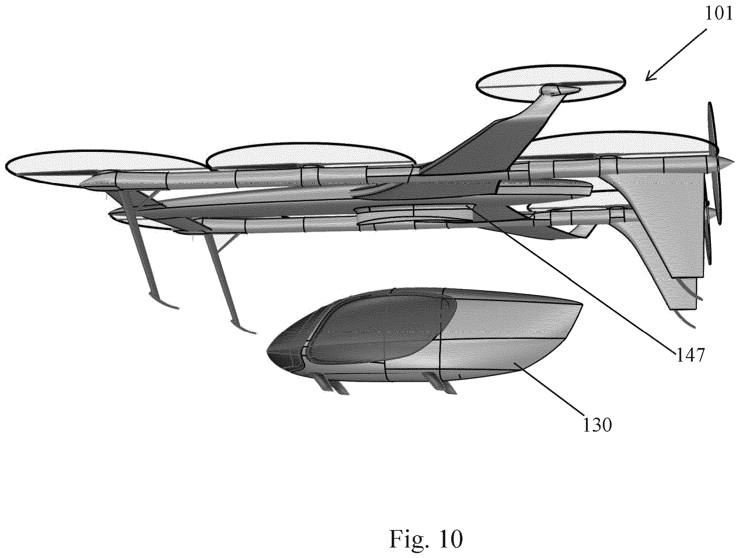

Fig. 10 generally depicts one aspect of the disclosure where the cabin (whether cargo cabin or passenger cabin) is detachable. Here, passenger cabin 140 can be selectively detached from the flying platform 101. The engagement and disengagement between the flying platform 101 and the cabin 140 can be performed autonomously (without simultaneous user intervention) by a computer and/or other sensors and computing devices. Alternatively or optionally, the user can actively control and direct the engagement and disengagement between the flying platform 101 and the cabin 140.

As those of ordinary skill in the art will recognize, various different types of engaging mechanism 147 can be used to secure the cabin 140 to the flying platform 101. For example, the engaging mechanism can be mechanical catches, magnetic catches, tracks and grooves, or a combination of any known engagement means.

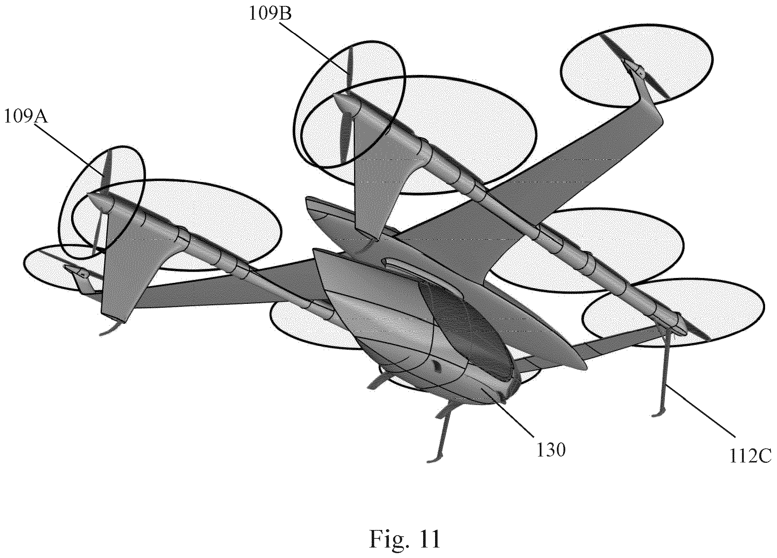

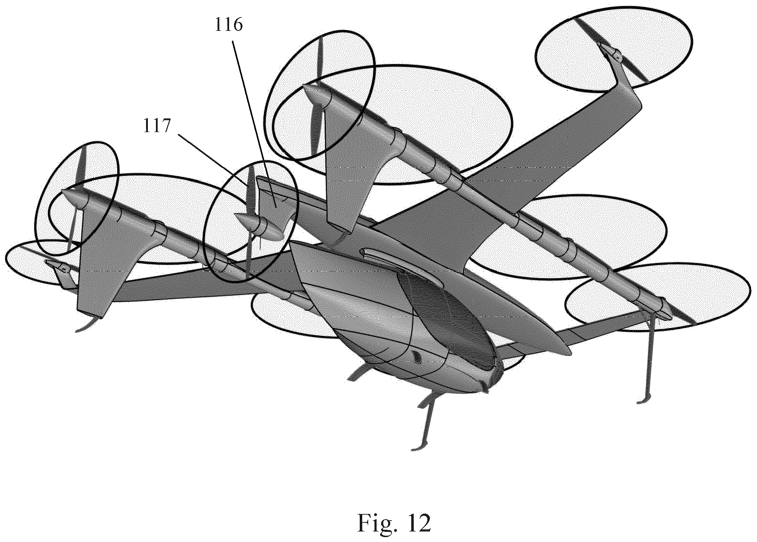

It is important to appreciate that besides having the two pushing propellers 107A and 107B (as shown in Fig. 11), alternatively or optionally, there can be a center pushing propeller 117 coupled to the rear end of the main body 102 (as shown in Fig. 12). As illustrated in Fig. 12, a center pushing propeller 117 is connected to the rear end of the main body 102 via a vertical extender 116. The vertical extender 116 can be any structure of any shape to physically couple to pushing propeller 117 such that the center of rotation for the pushing propeller 117 is vertically offset from the main body 102. In yet another embodiment, the pushing propeller 117 is vertically offset from the main body 102 such that the center of rotation for the pushing propeller 117 is vertically located at a position to the rear of the cabin 140, and vertically level with the cabin 140.

Not shown in any of the figures is an example where there are no pushing propellers 107A, 107B at the end of the linear supports 103A, 103B, respectively. Instead, there can only be one pushing propeller 117 coupled to the rear end of the main body 102.

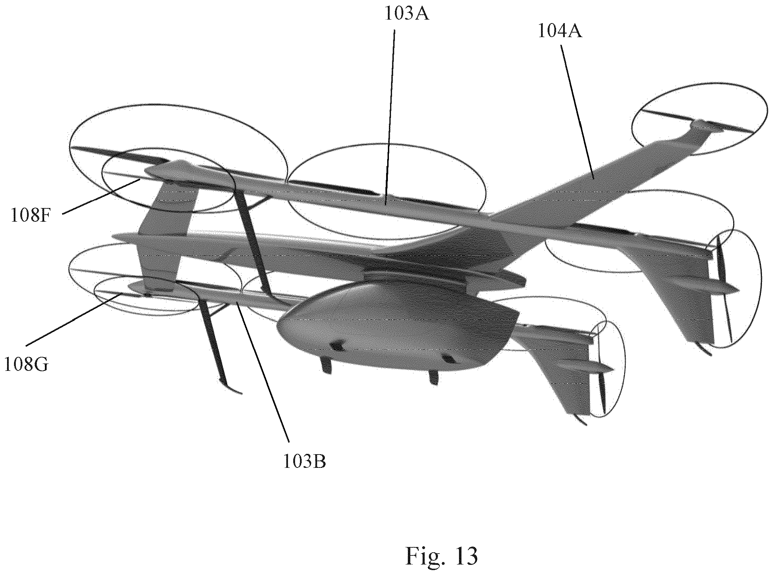

It is also contemplated that each linear support 103A, 103B can contain more than three lifting propellers by providing a longer linear support to contain more lifting propellers, by using smaller diameter lifting propellers, or by placing lifting propellers on both the top side and the bottom side of the linear support. Fig. 13 shows one example where two additional lifting propellers 108G, 108H are provided at the bottom front ends of linear support 103A, 103B.

While the pushing propellers 107A, 107B has been shown in previous figures to locate at the rear distal ends of the linear supports 103A, 103B, it is specifically contemplated that these pushing propellers 107A, 107B can be disposed at a horizontal level that is lower than the main wings 104A, 104B such as those shown in Fig. 13. In one aspect, these pushing propellers 107A, 107B can be disposed at a horizontal level substantially equal to the horizontal level of the cabin 130, 140 being carried by the flying platform 101. In another aspect, these pushing propellers 107A, 107B can be disposed about mid-way down the vertical stabilizers 106A, 106B. One contemplated reason to lower the disposition of the pushing propellers 107A, 107B is to minimize a head-dipping effect during flight, which can be caused by aerodynamic effects caused by the cabin 130, 140.

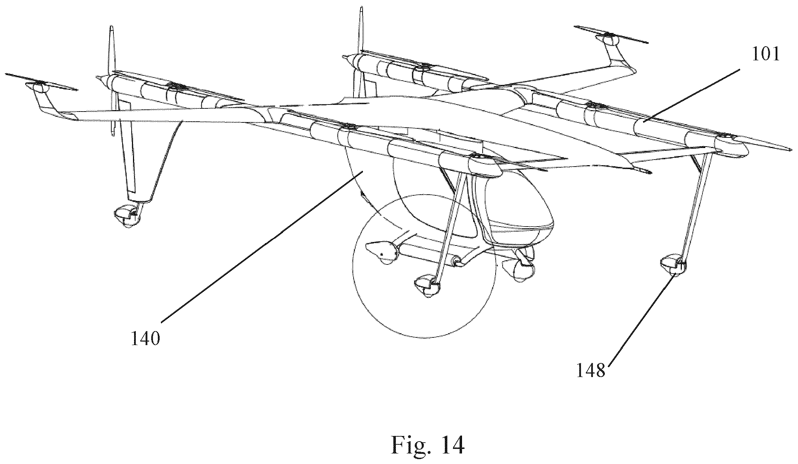

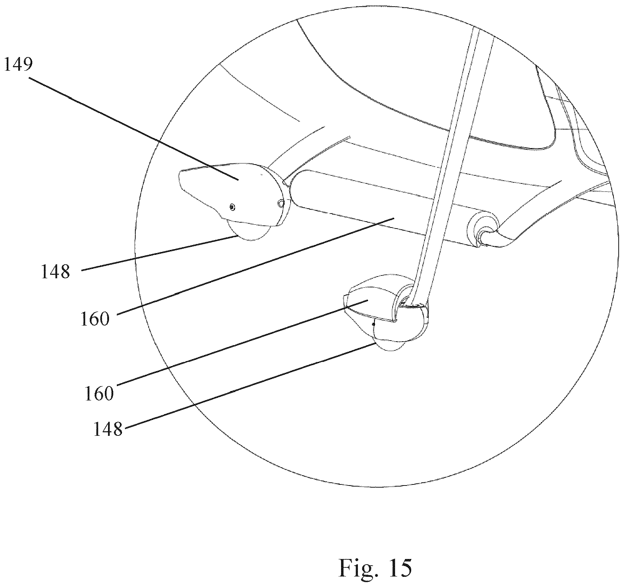

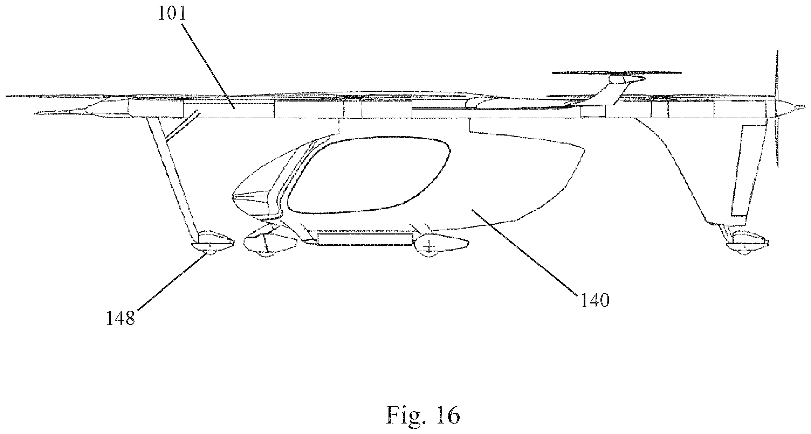

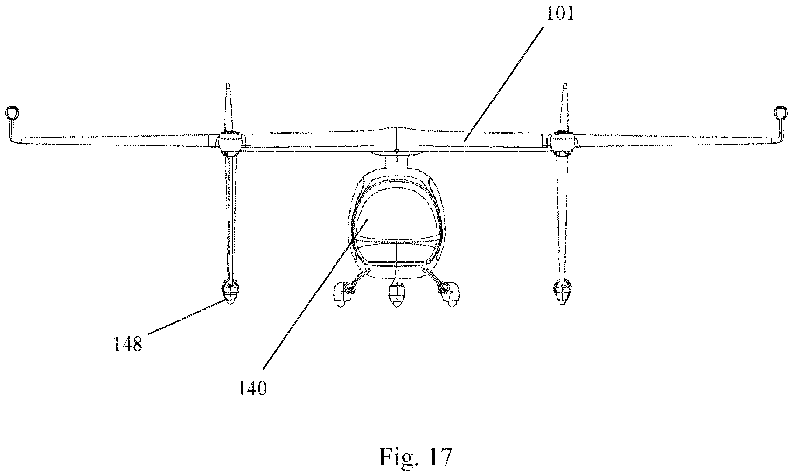

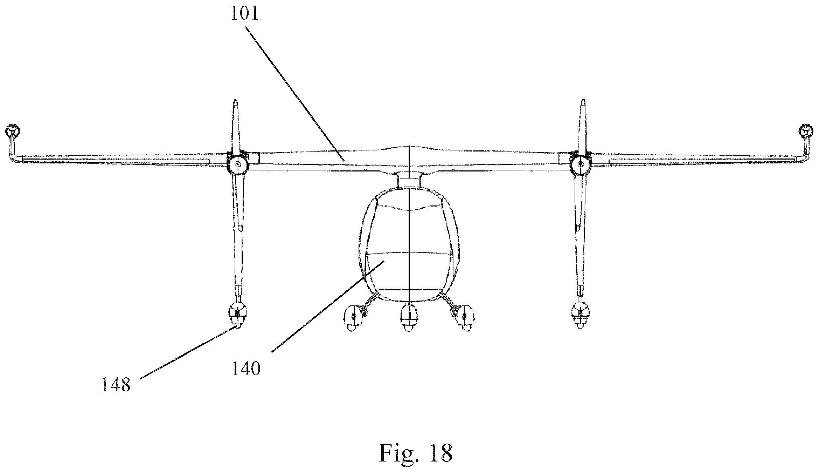

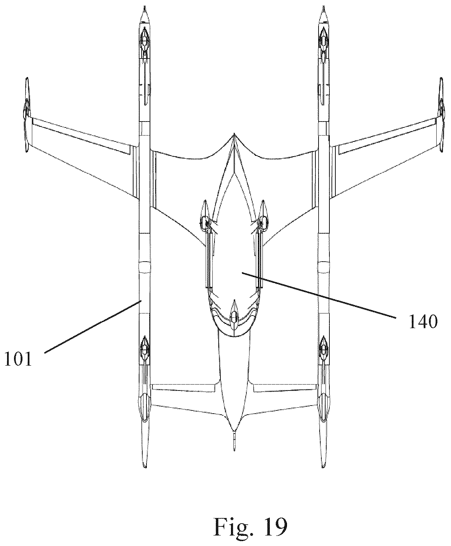

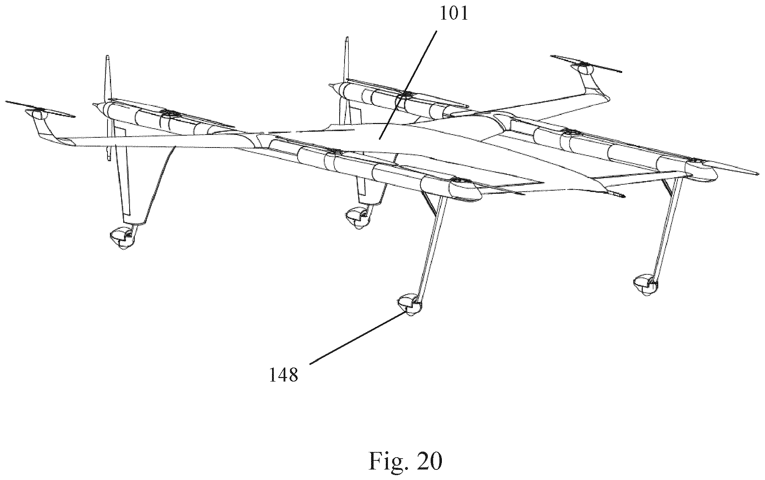

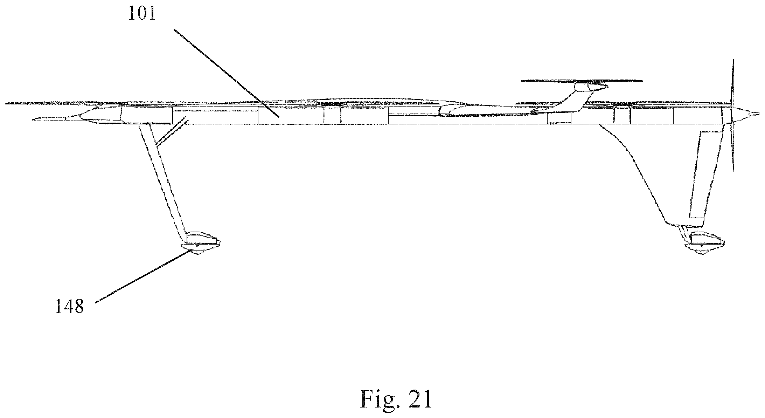

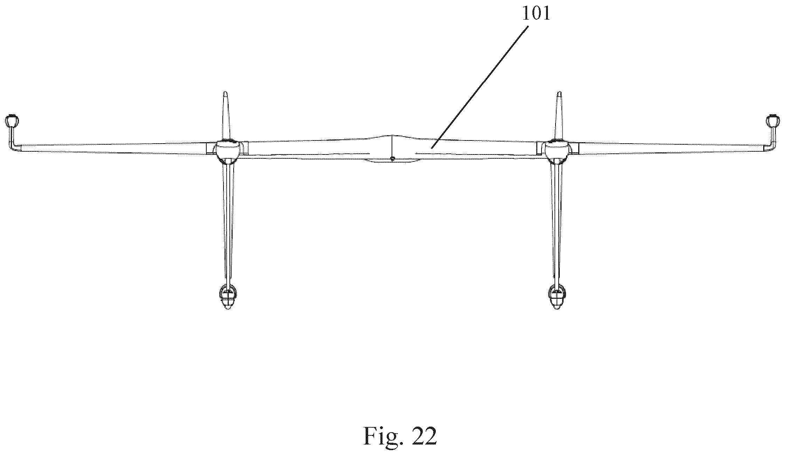

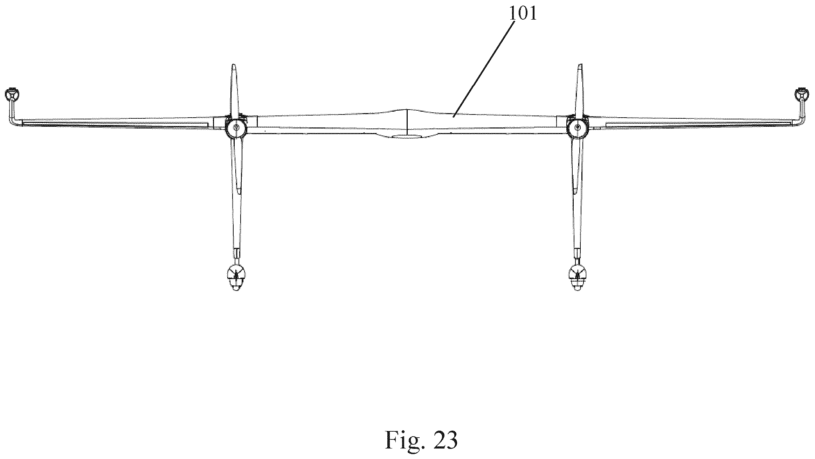

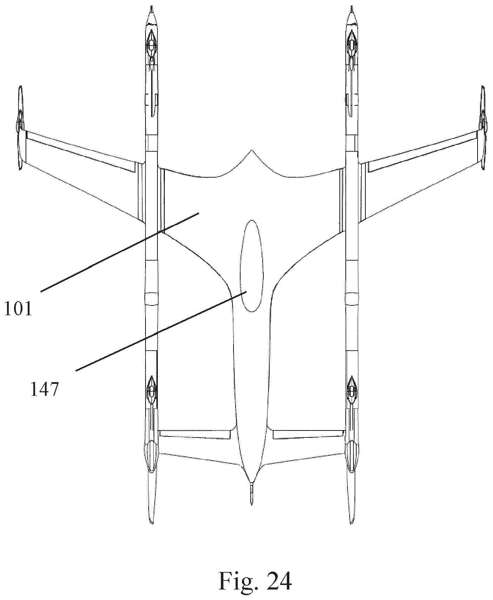

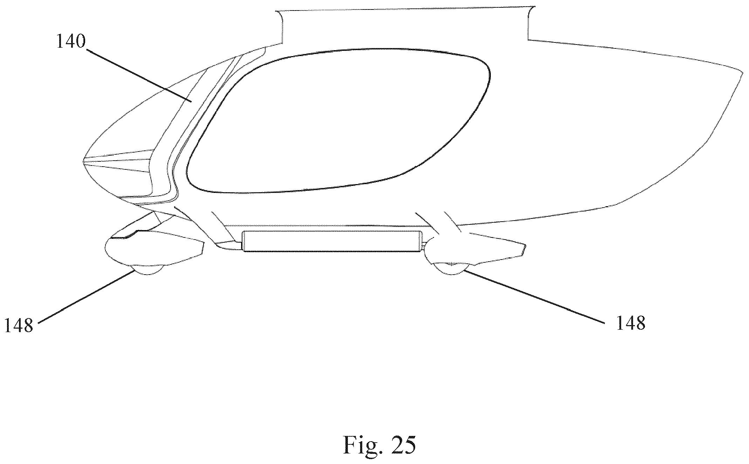

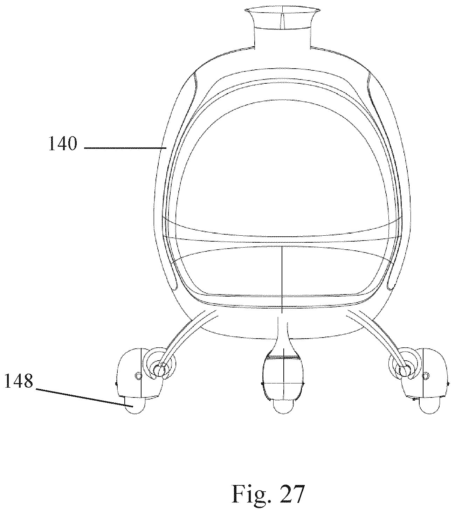

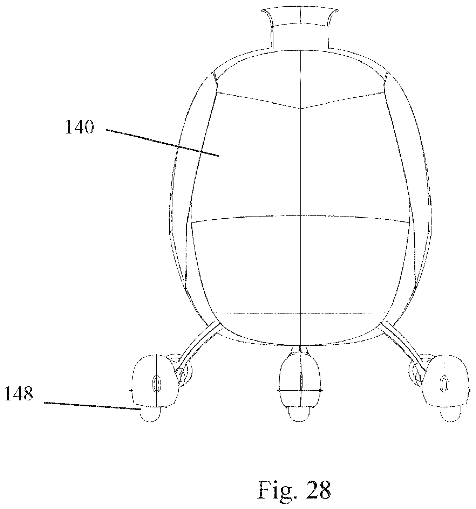

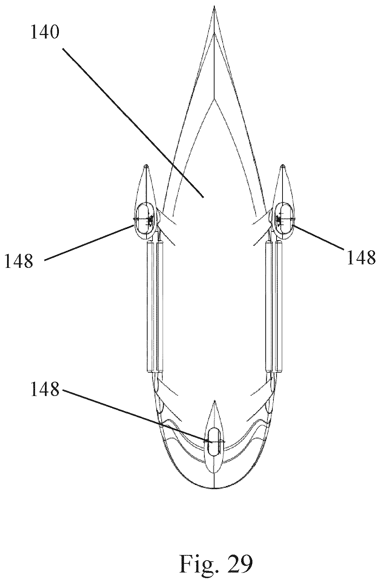

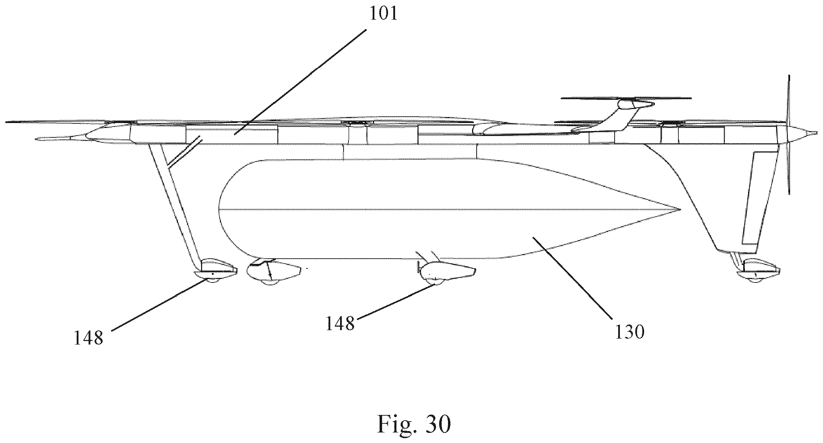

Figs. 14 to 30 illustrate examples where the flying platform 101 or the cabin 130, 140, or both, may each have motorized wheels 148 attached thereon. In the embodiment of Fig. 14, the flying platform 101 has motorized wheels 148; the cabin 130, 140 also has motorized wheels. Referring now to the example of Fig. 15, a single unit of motorized wheel 148 can have a motor enclosed in a housing 149, and the motor can be driven by electricity supplied by the energy storage unit 150 disposed in the cabin 130, 140.

The contemplated motorized wheel 148 can move the flying platform 101 and the cabin 130 across the ground, when they are resting on the ground. This allows a cabin 130, 140 to wheel away from the flying platform 101, and allows another cabin 130, 140 to wheel itself to the flying platform 101 for coupling.

Alternatively, this can allow a flying platform 101 to wheel away from the cabin 130 and towards another cabin for coupling. In one embodiment, every cabin 130, 140 can have an energy storage unit 155 so that when the flying platform 101 couples to a new and fully charged cabin 130, 140, the flying platform 101 essentially has replenished its source of energy.

In some embodiments of the disclosed drone system there can be provided at least one floatation device 160 coupled to at least one of the cargo cabin 130, passenger cabin 140, and the flying platform 101. The contemplate floatation device can be a type that requires actuation, that is, active inflation with gas or upon material when needed. In other words, in this particular embodiment, the floatation device 160 can remain in a deflated state and is inflated only when certain conditions triggers the inflation. For example, the floatation device 160 can be automatically inflated during emergency landing; it can be inflated automatically during water landing; it can be inflated when any of the landing gears malfunction in some ways.

Many known types of inflation mechanism or air bag mechanism may be implemented to achieve the needs and constructions of the disclosed floatation device 160. The contemplated floatation device 160 may be a type that can be reused, re-inflated, re-deflated, over and over. The contemplated floatation device 160 can also be of one-time use only.

Alternatively or optionally, the act of inflation can be user activated. For example, when the operator of the drone system determines a need for inflating the floatation device 160, he or she may send a signal to initiate inflation.

It should be particularly noted in some embodiments, the floatation device 160 does not require the existence of motorized wheels 148. In other embodiments, the floatation device 160 is part of the housing for the motorized wheel 148.

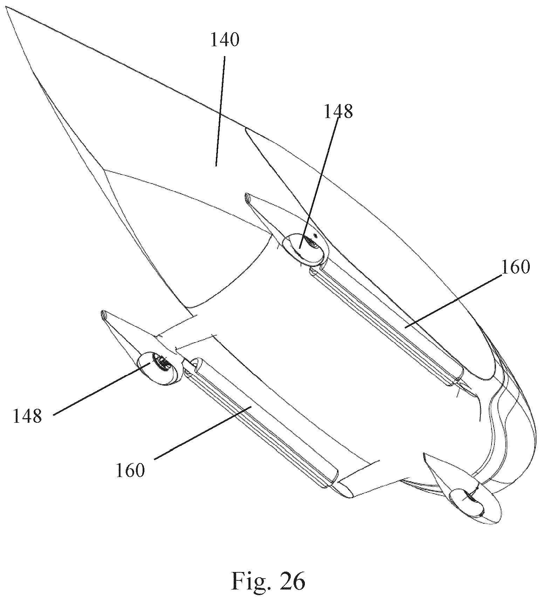

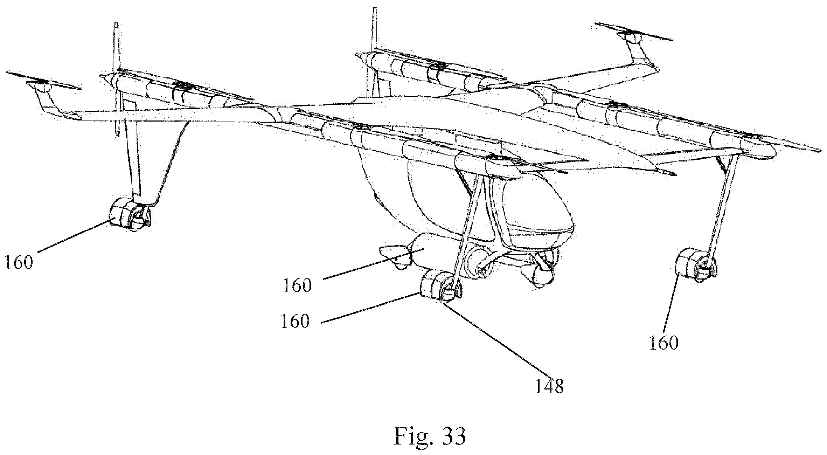

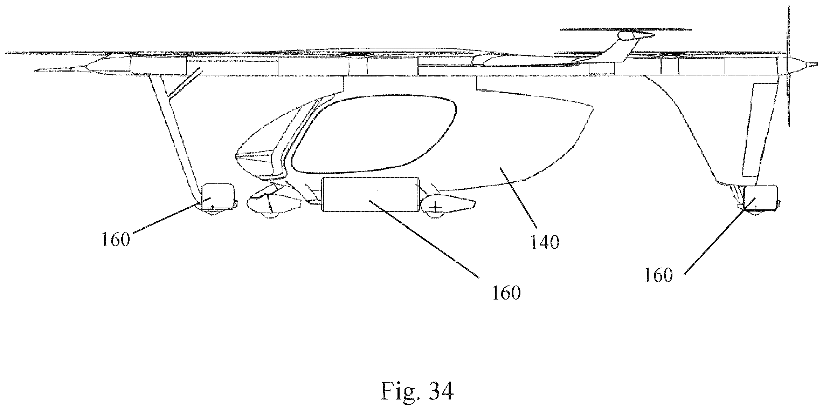

Referring to Fig. 26 as one example, a passenger cabin 140 can have an elongated floatation device 160 disposed on either sides of the cabin 140 that can perform as a water landing gear. In Fig. 26, these floatation devices 160 are shown as deflated. Fig. 32 shows a side view of a deflated floatation device 160. In Figs. 33 and 34, the floatation device 160 coupled to the passenger cabin 140 are shown as inflated.

Referring to Fig. 31 as another example, a flying platform 101 can have four floatation devices 160 disposed on top of each of the four motorized wheels 148. These floatation devices 160 may alternatively attach to or near the motorized wheels 148 at other locations. In Fig. 31, these floatation devices 160 that are coupled to the motorized wheels 148 are shown as deflated. Figs. 33 and 34 show floatation devices 160 of the flying platform 101 being inflated.

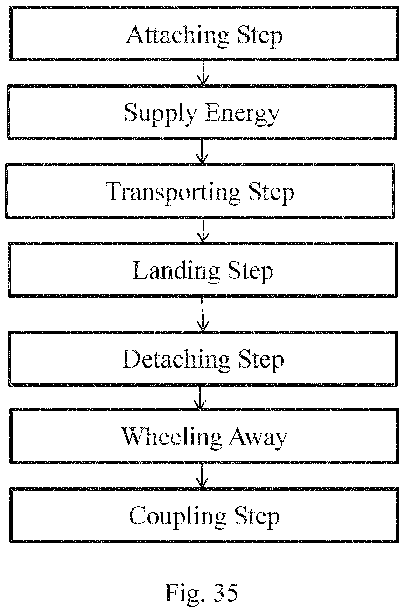

This disclosure also provides a method of managing a system of aerial drone transport and drone energy charging. Referring now to Fig. 35, one contemplated method can include attaching a first cabin 130, 140 to a flying platform 101 to transport the first cabin (whether the first cabin is a cargo cabin 130 or a passenger cabin 140) by flying using the flying platform 101 as a primary source of propulsion.

Of the many contemplated methods possible, one embodiment of the disclosed methods can also include the step of providing at least one set of propellers on the flying platform 101. These can be pushing propellers or lifting propellers as described above.

It is also contemplated to include a step of supplying a first unit of energy from a first energy storage unit disposed within the first cabin 130, 140, to the flying platform 101 to drive the at least one set of propeller when the first cabin 130, 140 is attached to the flying platform.

In one embodiment, the method further includes landing the flying platform 101 on a ground while the first cabin 130, 140 is still attached to the flying platform 101.

The method can further include a detaching step after the landing step, by detaching the first cabin 130, 140 from the flying platform 101. This is typically done while the flying platform 101 has landed on the ground.

Further contemplated is a wheeling step after the detaching step. In this embodiment, the method includes wheeling the first cabin 130, 140 away from the flying platform 101 using at least a first set of motorized wheels disposed on the first cabin 130, 140. At this point, there may be many other loaded or empty cabins 130, 140 resting on or near the landing pad, ready to couple to the flying platform 101. This allows a single flying platform 101 to quickly drop off and pick up different cabins 130, 140 without spending time to load and unload a cabin 130, 140.

In one embodiment, a method can have a coupling step after the wheeling step, by coupling a second cabin 130, 140 to the flying platform 101. The second cabin 130, 140 can have at least a second set of motorized wheels 148 and a second energy storage unit 155 disposed therein.

In one other embodiment, the wheeling away step is controlled by a microprocessor, sensors, and is performed automatically in a robotic fashion.

In yet another embodiment, the second energy storage unit 155 can supply a second unit of energy to the flying platform 101 to drive the flying platform's propeller as a primary source of energy, thereby allowing the flying platform 101 to continue flying without directly charging the flying platform 101. In other words, continuous flight of the flying platform 101 and non-stop transport of cargos and passengers can now be possible.

Thus, specific embodiments and applications of VTOL flying platform with interchangeable cabins have been disclosed. It should be apparent, however, to those skilled in the art that many more modifications besides those already described are possible without departing from the disclosed concepts herein, as defined by the claims.

## Claims

1. A VTOL (vertical take-off and landing) aerial drone comprising:
a flying platform (101) having:
a left main wing (104A) and a right main wing (104B);
a left secondary wing (105A) and a right secondary wing (105B);
a main body (102) coupled to the left main wing (104A) and the right main wing (104B);
a left linear support (103A) connecting the left main wing (104A) to the left secondary wing (105A);
a right linear support (103B) connecting the right main wing (104B) to the right secondary wing (105B);
the left linear support (103A) has a first, a second, a third lifting propellers, and a left vertical stabilizer (106A);
the right linear support (103B) has a fourth, a fifth, a sixth lifting propellers and a right vertical stabilizer (106B);
a cargo cabin (130) or a passenger cabin (140) being detachably coupled to the flying platform (101); and
at least one pushing propeller (107A, 107B; 117) coupled to either the platform (101) or the cabin (130; 140),
**characterized in that**,
the at least one pushing propeller (107A, 107B; 117) is disposed so as to be vertically level with, that is, disposed at a horizontal level equal to the horizontal level of the cargo cabin (130) or the passenger cabin (140).

2. The aerial drone as recited in claim 1 further comprising a first energy storage unit (155) disposed in the cargo cabin (130) and/or the passenger cabin (140) configured to supply energy to the flying platform (101).

3. The aerial drone as recited in at least one of the previous claims further comprising an inflatable floatation device (160) coupled to at least one of the passenger cabin (140), cargo cabin (130), and flying platform (101).

4. The aerial drone as recited in at least one of the previous claims, wherein the left linear support (103A) has a seventh lifting propeller (108G) disposed on an underside of the left linear support (103A), and the right linear support (103B) has an eighth lifting propeller (108H) disposed on an underside of the right linear support (103B).

5. The aerial drone as recited in at least one of the previous claims further comprising a left wing-tip propeller (109A) disposed on the distal end of the left main wing (104A), and a right wing-tip propeller (109B) disposed on the distal end of the right main wing (104B).

6. The aerial drone as recited in claim 1, wherein the at least one pushing propeller includes a left pushing propeller (107A) disposed in a mid-section of the left vertical stabilizer (106A), and a right pushing propeller (107B) disposed in a mid-section of the right vertical stabilizer (106B).

7. The aerial drone as recited in claim 1, wherein the at least one pushing propeller (117) is coupled to a rear end of the main body (102) and is extended downward away from the main body (102).

8. The aerial drone as recited in claim 1, wherein the at least one pushing propeller (107) is disposed on a rear end of the said cargo cabin (130) or said passenger cabin (140).

9. The aerial drone as recited in at least one of the previous claims further comprising autonomous flight functions and the passenger cabin (140) includes user control interface to manually control flight functions.

10. The aerial drone as recited in at least one of the previous claims, wherein the passenger cabin (140) and the cargo cabin (130) can be detachably attached to the bottom of the flying platform (101).

11. The aerial drone as recited in claim 10 further comprising a second energy storage unit (150) disposed within the flying platform (101), and the flying platform (101) is configured to fly on its own without being attached to any one of said passenger cabin (140) and cargo cabin (130).

12. The aerial drone as recited in at least one of the previous claims, wherein the flying platform (101) has at least one motorized wheel (148) configured to move the flying platform (101) across a surface of a ground.

13. The aerial drone as recited in claim 12, wherein the at least one motorized wheel (148) is disposed at a distal end of a folding leg (111), which is retrievable within the linear support (103A; 103B).

14. The aerial drone as recited in at least one of the previous claims, wherein both the passenger cabin (140) and the cargo cabin (130) each has at least one motorized wheel (148) configured to move the passenger cabin (140) and the cargo cabin (130) across a surface of a ground.

15. A method of managing a system of aerial drone transport and energy charging, the method comprising:
attaching a first cabin (130; 140) to a flying platform (101) to transport said first cabin (130; 140) via flight using said flying platform (101) as a primary source of propulsion;
providing at least one set of propellers on the flying platform (101)
providing at least one pushing propeller (107A, 107B; 117) coupled to either the flying platform (101) or the first cabin (130; 140) and being disposed so as to be vertically level with, that is, disposed at a horizontal level equal to the horizontal level of the first cabin (130, 140);
supplying a first unit of energy from a first energy storage unit (155) disposed within the first cabin (130; 140), to the flying platform (101) to drive the at least one set of propeller when the first cabin (130; 140) is attached to the flying platform (101);
landing the flying platform (101) on a ground wherein the first cabin (130; 140) is attached to the flying platform (101); and
wherein the first cabin (130; 140) contains a passenger and/or a cargo.

16. The method as recited in claim 15, wherein after the landing step, detaching the first cabin (130; 140) from the flying platform (101).

17. The method as recited in claim 16, wherein after the detaching step, wheeling the first cabin (130; 140) away from the flying platform (101) using at least a first set of motorized wheels (148) disposed on the first cabin (130; 140).

18. The method as recited in claim 17, wherein after the wheeling step, coupling a second cabin (130; 140) to the flying platform (101), and wherein the second cabin (130; 140) has at least a second set of motorized wheels (148) and a second energy storage unit (155) disposed therein; wherein the second cabin (130; 140) contains another passenger and/or another cargo.

19. The method as recited in claim 18, wherein the second energy storage unit (155) supplies a second unit of energy to the platform (101) to drive the at least one set of propeller as an primary source of energy, thereby allowing the flying platform (101) to continue flying without directly charging the flying platform (101).

## Patentansprüche

1. VTOL-Luftdrohne (Luftdrohne mit vertikalem Start und vertikaler Landung), die Folgendes umfasst:
eine Flugplattform (101), die Folgendes aufweist:
einen linken Hauptflügel (104A) und einen rechten Hauptflügel (104B);
einen linken Sekundärflügel (105A) und einen rechten Sekundärflügel (105B);
einen Hauptkörper (102), der mit dem linken Hauptflügel (104A) und dem rechten Hauptflügel (104B) gekoppelt ist;
einen linken linearen Träger (103A), der den linken Hauptflügel (104A) mit dem linken Sekundärflügel (105A) verbindet;
einen rechten linearen Träger (103B), der den rechten Hauptflügel (104B) mit dem rechten Sekundärflügel (105B) verbindet;
wobei der linke lineare Träger (103A) einen ersten, einen zweiten, einen dritten Hebepropeller und einen linken vertikalen Stabilisator (106A) aufweist;
wobei der rechte lineare Träger (103B) einen vierten, einen fünften, einen sechsten Hebepropeller und einen rechten vertikalen Stabilisator (106B) aufweist;
eine Frachtkabine (130) oder eine Passagierkabine (140), die auf lösbare Weise mit der Flugplattform (101) gekoppelt ist; und
mindestens einen Schubpropeller (107A, 107B; 117), der entweder mit der Plattform (101) oder der Kabine (130; 140) gekoppelt ist,
**dadurch gekennzeichnet, dass**
der mindestens eine Schubpropeller (107A, 107B; 117) derart angeordnet ist, dass er sich bezüglich der Frachtkabine (130) oder der Passagierkabine (140) auf derselben Höhe befindet, das heißt, dass er in einer horizontalen Ebene angeordnet ist, die gleich ihrer horizontalen Ebene ist.

2. Luftdrohne nach Anspruch 1, die ferner eine erste Energiespeichereinheit (155), die in der Frachtkabine (130) und/oder der Passagierkabine (140) angeordnet ist, umfasst, die konfiguriert ist, der Flugplattform (101) Energie zuzuführen.

3. Luftdrohne nach mindestens einem der vorhergehenden Ansprüche, die ferner eine aufblasbare Schwebevorrichtung (160), die mit der Passagierkabine (140) und/oder der Frachtkabine (130) und/oder der Flugplattform (101) gekoppelt ist, umfasst.

4. Luftdrohne nach mindestens einem der vorhergehenden Ansprüche, wobei der linke lineare Träger (103A) einen siebten Hebepropeller (108G) aufweist, der auf einer Unterseite des linken linearen Trägers (103A) angeordnet ist, und der rechte lineare Träger (103B) einen achten Hebepropeller (108H) aufweist, der auf einer Unterseite des rechten linearen Trägers (103B) angeordnet ist.

5. Luftdrohne nach mindestens einem der vorhergehenden Ansprüche, die ferner einen linken Flügelspitzenpropeller (109A), der auf dem entfernten Ende des linken Hauptflügels (104A) angeordnet ist, und einen rechten Flügelspitzenpropeller (109B), der auf dem entfernten Ende des rechten Hauptflügels (104B) angeordnet ist, umfasst.

6. Luftdrohne nach Anspruch 1, wobei der mindestens eine Schubpropeller einen linken Schubpropeller (107A), der in einem Mittelabschnitt des linken vertikalen Stabilisators (106A) angeordnet ist, und einen rechten Schubpropeller (107B), der in einem Mittelabschnitt des rechten vertikalen Stabilisators (106B) angeordnet ist, enthält.

7. Luftdrohne nach Anspruch 1, wobei der mindestens eine Schubpropeller (117) mit einem hinteren Ende des Hauptkörpers (102) gekoppelt ist und sich vom Hauptkörper (102) weg nach unten erstreckt.

8. Luftdrohne nach Anspruch 1, wobei der mindestens eine Schubpropeller (107) auf einem hinteren Ende der Frachtkabine (130) oder der Passagierkabine (140) angeordnet ist.

9. Luftdrohne nach mindestens einem der vorhergehenden Ansprüche, die ferner Funktionen zum autonomen Fliegen umfasst und wobei die Passagierkabine (140) eine Anwendersteuerschnittstelle, um Flugfunktionen manuell zu steuern, enthält.

10. Luftdrohne nach mindestens einem der vorhergehenden Ansprüche, wobei die Passagierkabine (140) und die Frachtkabine (130) auf lösbare Weise am Boden der Flugplattform (101) befestigt sein können.

11. Luftdrohne nach Anspruch 10, die ferner eine zweite Energiespeichereinheit (150), die in der Flugplattform (101) angeordnet ist, umfasst und wobei die Flugplattform (101) konfiguriert ist, eigenständig zu fliegen, ohne mit der Passagierkabine (140) oder der Frachtkabine (130) verbunden zu sein.

12. Luftdrohne nach mindestens einem der vorhergehenden Ansprüche, wobei die Flugplattform (101) mindestens ein motorisiertes Rad (148) aufweist, das konfiguriert ist, die Flugplattform (101) über eine Oberfläche eines Bodens zu bewegen.

13. Luftdrohne nach Anspruch 12, wobei das mindestens eine motorisierte Rad (148) an einem entfernten Ende eines Faltbeins (111) angeordnet ist, das in den linearen Träger (103A; 103B) eingezogen werden kann.

14. Luftdrohne nach mindestens einem der vorhergehenden Ansprüche, wobei sowohl die Passagierkabine (140) als auch die Frachtkabine (130) jeweils mindestens ein motorisiertes Rad (148) aufweisen, das konfiguriert ist, die Passagierkabine (140) und die Frachtkabine (130) über eine Oberfläche eines Bodens zu bewegen.

15. Verfahren zum Managen eines Systems zum Transport mittels Luftdrohne und zum Aufladen mit Energie, wobei das Verfahren Folgendes umfasst:
Befestigen einer ersten Kabine (130; 140) an einer Flugplattform, um die Kabine (130; 140) mittels Flug unter Verwendung der Flugplattform (101) als eine primäre Vortriebsquelle zu transportieren;
Bereitstellen mindestens einer Gruppe von Propellern auf der Flugplattform (101);
Bereitstellen mindestens eines Schubpropellers (107A, 17B; 117), der entweder mit der Flugplattform (101) oder der ersten Kabine (130; 140) gekoppelt ist und derart angeordnet ist, dass er sich in Bezug auf die erste Kabine (130; 140) auf derselben Höhe befindet, das heißt, dass er in einer horizontalen Ebene angeordnet ist, die gleich ihrer horizontalen Ebene ist;
Zuführen einer ersten Energieeinheit von einer ersten Energiespeichereinheit (155), die in der ersten Kabine (130; 140) angeordnet ist, zur Flugplattform (101), um die mindestens eine Gruppe von Propellern anzutreiben, wenn die ersten Kabine (130; 140) an der Flugplattform (101) befestigt ist;
Landen der Flugplattform (101) auf einem Boden, wobei die erste Kabine (130; 140) an der Flugplattform (101) befestigt ist; und
wobei die erste Kabine (130; 140) einen Passagier und/oder eine Fracht enthält.

16. Verfahren nach Anspruch 15, wobei nach dem Landeschritt die erste Kabine (130; 140) von der Flugplattform (101) gelöst wird.

17. Verfahren nach Anspruch 16, wobei nach dem Löseschritt die erste Kabine (130; 140) unter Verwendung mindestens einer ersten Gruppe motorisierter Räder (148), die an der ersten Kabine (130; 140) angeordnet sind, von der Flugplattform (101) weggerollt wird.

18. Verfahren nach Anspruch 17, wobei nach dem Rollschritt eine zweite Kabine (130; 140) mit der Flugplattform (101) gekoppelt wird und wobei die zweite Kabine (130; 140) mindestens eine zweite Gruppe motorisierter Räder (148) und eine zweite Energiespeichereinheit (155), die darin angeordnet ist, aufweist; wobei die zweite Kabine (130; 140) einen weiteren Passagier und/oder eine weitere Fracht enthält.

19. Verfahren nach Anspruch 18, wobei die zweite Energiespeichereinheit (155) als eine primäre Energiequelle der Plattform (101) eine zweite Energieeinheit zuführt, um die mindestens eine Gruppe von Propellern anzutreiben, wodurch ermöglicht wird, dass die Flugplattform (101) das Fliegen fortsetzt, ohne die Flugplattform (101) direkt aufzuladen.

## Revendications

1. Drone aérien du type ADAV (avion à décollage et atterrissage vertical) comprenant :
une plate-forme de vol (101) ayant :
une voilure principale de gauche (104A) et une voilure principale de droite (104B) ;
une voilure secondaire de gauche (105A) et une voilure secondaire de droite (105B) ;
un corps principal (102) couplé à la voilure principale de gauche (104A) et à la voilure principale de droite (104B) ;
un support linéaire de gauche (103A) connectant physiquement la voilure principale de gauche (104A) à la voilure secondaire de gauche (105A) ;
un support linéaire de droite (103B) connectant physiquement la voilure principale de droite (104B) à la voilure secondaire de droite (105B) ;
le support linéaire de gauche (103A) a un premier, un deuxième et un troisième propulseur, et un stabilisateur vertical de gauche (106A) ;
le support linéaire de droite (103B) a un quatrième, un cinquième et un sixième propulseur et un stabilisateur vertical de droite (106B) ;
une cabine de chargement (130) ou une cabine de passager (140) étant couplée de manière détachable à la plate-forme de vol (101) ; et
au moins un propulseur de poussée (107A, 107B ; 117) couplé soit à la plate-forme (101), soit à la cabine (130 ; 140),
**caractérisé en ce que**
ledit au moins un propulseur de poussée (107A, 107B ; 117) est disposé de manière à être verticalement de niveau avec la cabine de chargement (130) ou la cabine de passager (140), c'est-à-dire disposé à un niveau horizontal égal au niveau horizontal de la cabine.

2. Drone aérien selon la revendication 1, comprenant en outre une première unité de stockage d'énergie (155) disposée dans la cabine de chargement (130) et/ou dans la cabine de passager (140), configurée pour alimenter la plate-forme de vol (101) en énergie.

3. Drone aérien selon l'une au moins des revendications précédentes, comprenant en outre un dispositif de flottaison gonflable (160) couplé à au moins un élément parmi la cabine de passager (140), la cabine de chargement (130) et la plate-forme de vol (101).

4. Drone aérien selon l'une au moins des revendications précédentes, dans lequel le support linéaire de gauche (103A) a un septième propulseur de levage (108G) disposé sur une face inférieure du support linéaire de gauche (103 A), et le support linéaire de droite (103B) a un huitième propulseur de levage (108h) disposé sur une face inférieure du support linéaire de droite (103B).

5. Drone aérien selon l'une au moins des revendications précédentes, comprenant en outre un propulseur de bout de voilure de gauche (109A) disposé sur l'extrémité distale de la voilure principale de gauche (104A), et un propulseur de bout de voilure de droite (109B) disposé sur l'extrémité distale de la voilure principale de droite (104B).

6. Drone aérien selon la revendication 1, dans lequel ledit au moins un propulseur de poussée inclut un propulseur de poussée de gauche (107A) disposé dans une section médiane du stabilisateur vertical de gauche (106A), et un propulseur de poussée de droite (107B) disposé dans une section médiane du stabilisateur vertical de droite (106B).

7. Drone aérien selon la revendication 1, dans lequel ledit au moins un propulseur de poussée (117) est couplé à une extrémité arrière du corps principal (102) et s'étend vers le bas en éloignement du corps principal (102).

8. Drone aérien selon la revendication 1, dans lequel ledit au moins un propulseur de poussée (107) est disposé sur une extrémité arrière de ladite cabine de chargement (130) ou de ladite cabine de passager (140).

9. Drone aérien selon l'une au moins des revendications précédentes, comprenant en outre des fonctions de vol autonome et la cabine de passager (140) inclut une interface de commande d'utilisateur pour une commande manuelle des fonctions de vol.

10. Drone aérien selon l'une au moins des revendications précédentes, dans lequel la cabine de passager (140) et la cabine de chargement (130) peuvent être fixées de manière détachable sur le fond de la plate-forme de vol (101).

11. Drone aérien selon la revendication 10, comprenant en outre une seconde unité de stockage d'énergie (150) disposée à l'intérieur de la plate-forme de vol (101), et la plate-forme de vol (101) est configurée pour voler d'elle-même sans être fixée à une cabine quelconque parmi la cabine de passager (140) et ladite cabine de chargement (130).

12. Drone aérien selon l'une au moins des revendications précédentes, dans lequel la plate-forme de vol (101) a au moins une roue motorisée (148) configurée pour déplacer la plate-forme de vol (101) sur une surface d'un sol.

13. Drone aérien selon la revendication 12, dans lequel ladite au moins une roue motorisée (148) est disposée à une extrémité distale d'une jambe pliable (111) qui peut être ramenée à l'intérieur du support linéaire (103A ; 103B).

14. Drone aérien selon l'une au moins des revendications précédentes, dans lequel à la fois la cabine de passager (140) et la cabine de chargement (130) ont chacune au moins une roue motorisée (148) configurée pour déplacer la cabine de passager (140) et la cabine de chargement (130) sur une surface d'un sol.

15. Procédé de gestion d'un système de transport et de chargement d'énergie de drone aérien, le procédé comprenant les étapes consistant à :
fixer une première cabine (130 ; 140) sur une plate-forme de vol (101) pour transporter ladite première cabine (130 ; 140) en vol en utilisant ladite plate-forme de vol (101) à titre de source primaire de propulsion ;
doter la plate-forme de vol (101) d'au moins un groupe de propulseurs ;
prévoir au moins un propulseur de poussée (107A, 107B ; 117) couplé soit à la plate-forme de vol (101), soit à la première cabine (130 ; 140), et étant disposé de manière à être verticalement de niveau avec la première cabine (130 ; 140), c'est-à-dire disposé à un niveau horizontal égal au niveau horizontal de la cabine ;
fournir une première unité d'énergie depuis une première unité de stockage d'énergie (155) disposée à l'intérieur de la première cabine (130 ; 140) jusqu'à la plate-forme de vol (101) pour entraîner au moins un groupe de propulseurs quand la première cabine (130 ; 140) est fixée sur la plate-forme de vol (101) ;
faire atterrir la plate-forme de vol (101) sur un sol, la première cabine (130 ; 140) étant fixée sur la plate-forme de vol (101) ; et
dans lequel la première cabine (130 ; 140) contient un passager et/ou un chargement.

16. Procédé selon la revendication 15, comprenant, après l'étape d'atterrissage, l'étape consistant à détacher la première cabine (130 ; 140) de la plate-forme de vol (101).

17. Procédé selon la revendication 16, comprenant, après l'étape de détachement, l'étape consistant à faire rouler la première cabine (130 ; 140) en éloignement de la plate-forme de vol (101) en utilisant au moins un premier groupe de roues motorisées (148) disposé sur la première cabine (130 ; 140).

18. Procédé selon la revendication 17, comprenant, après l'étape de roulement, l'étape consistant à coupler une seconde cabine (130 ; 140) à la plate-forme de vol (101), et dans lequel la seconde cabine (130 ; 140) a au moins un second groupe de roues motorisées (148) et une seconde unité de stockage d'énergie (155) disposée à l'intérieur ; dans lequel la seconde cabine (130 ; 140) contient un autre passager et/ou un autre chargement.

19. Procédé selon la revendication 18, dans lequel la seconde unité de stockage d'énergie (155) fournit une seconde unité d'énergie à la plate-forme (101) pour entraîner ledit au moins un groupe de propulseurs à titre de source primaire d'énergie, permettant ainsi à la plate-forme de vol (101) de continuer à voler sans charger directement la plate-forme de vol (101).
